# EUROPÄISCHE PATENTSCHRIFT

(11) **EP 1 295 521 B1**
(45) Veröffentlichungstag und Bekanntmachung des Hinweises auf die Patenterteilung: **18.11.2009**
(21) Anmeldenummer: 02021074.6
(22) Anmeldetag: 21.09.2002
(51) Int. Cl.: A01D 34/68

(54) **Arbeitsgerät und Gerät zur Rasen-,Garten- und Grundstückspflege**
Working machine and machine for mowing and soil working
Machine de travail et machine pour tondre l'herbe et travailler le sol

(30) Priorität: 25.09.2001 US 964236
(43) Veröffentlichungstag der Anmeldung: 26.03.2003
(73) Patentinhaber: DEERE & COMPANY, Moline, Illinois 61265-8098 (US)
(72) Erfinder: Trefz, Harlin J., Jackson, TN 38305 (US)
(74) Vertreter: Magin, Ludwig Bernhard

(56) Entgegenhaltungen:
- EP-A- 0 903 073
- US-A- 5 307 612
- US-A- 5 375 674
- US-A- 5 809 755
- US-A- 6 082 083

## Beschreibung

Die Erfindung betrifft ein selbstfahrendes Arbeitsgerät mit einem Rahmen, einem Motor und wenigstens einem antreibbaren Rad, welches mit dem Motor über ein Getriebe verbindbar ist, sowie einem Holm, wobei an dem Holm in einem dem Rahmen abgewandten Endbereich wenigstens ein erstes und ein zweites Steuerelement vorgesehen sind, wobei das erste Steuerelement als ein Geschwindigkeitssteuerungselement und das zweite Steuerelement als ein Anwesenheitsschalter ausgebildet ist, und wobei das erste Steuerelement mit dem Holm und das zweite Steuerelement mit dem ersten Steuerelement schwenkbar verbunden ist, sowie ein Fahrzeug zur Rasen-, Garten- und Grundstückspflege.

Bekannte Arbeitsgeräte bzw. Geräte zur Rasen-, Garten- und Grundstückspflege, welche handgeführt ausgebildet sind, können Geschwindigkeitssteuerungseinrichtungen aufweisen, welche während eines Betriebs durch eine Bedienungsperson betätigt werden, so dass sich das Arbeitsgerät mit einer individuellen Geschwindigkeit bewegt. Ein Fahrantrieb bewegt das Arbeitsgerät proportional zu der Gehgeschwindigkeit der Bedienungsperson. Die US-A-4,558,558 zeigt einen Rasenmäher mit einem Fahrgeschwindigkeitssteuerungssystem, welches einen drehbar an einem Holm angebrachten Steuergriff aufweist. Der Steuergriff ist an dem Holm entlang zweier orthogonaler Drehachsen schwenkbar vorgesehen. Die US-A-6,082,083 zeigt ein Fahrgeschwindigkeitssteuerungssystem mit einem drehbaren Motorsteuerbügel, welcher schwenkbar mit einem verschiebbaren Handgriff verbunden ist.

Die US-A-5,375,674 zeigt eine Steuerung für ein Rasen- und Gartenfahrzeug, welche eine U-förmige Hauptrichtungssteuerung aufweist, die schwenkbar mit Führungsholmen verbunden ist. An dieser Hauptrichtungssteuerung sind ein Geschwindigkeitssteuerungshebel, Bremsbetätigungen und ein Anwesenheitshebel angebracht.

Diese Arten von Steuerung reagieren jedoch bei einem Betrieb auf rauem Untergrund, oder auch wenn das Fahrzeug gewendet oder gedreht wird, empfindlich, wodurch es schwierig wird, die Fahrzeuggeschwindigkeit zu steuern.

Die der Erfindung zugrundeliegende Aufgabe wird darin gesehen, dieses Problem zu überwinden. Darüber hinaus soll ein Arbeitsgerät zur Verfügung gestellt werden, welches auf rauem Untergrund eine größere Stabilität aufweist und durch eine Bedienungsperson besser gesteuert werden kann.

Dieses Problem wird erfindungsgemäß durch die Lehre der Patentansprüche 1 bzw. 9 gelöst, wobei in den weiteren Patentansprüchen die Lösung in vorteilhafter Weise weiterentwickelnde Merkmale aufgeführt sind.

Auf diese Weise wird ein selbstfahrendes Arbeitsgerät zur Verfügung gestellt, welches einen Rahmen mit einem Holm mit einem vorzugsweise im Wesentlichen U-förmigen rückwärtigen Endbereich aufweist. An dem Rahmen ist ein Motor vorgesehen und mit wenigstens einem antreibbaren Rad über ein Getriebe verbunden. Mit dem Getriebe ist wiederum eine durch eine Bedienungsperson betätigbare Steuerung verbunden, welche zumindest ein Geschwindigkeitssteuerungselement bzw. ein erstes Steuerelement, welches vorzugsweise mit dem Getriebe verbunden bzw. verbindbar ist, und ein zweites Steuerelement aufweist, welches einen Anwesenheitsschalter bilden bzw. einen solchen aufweisen kann. Das erste Steuerelement ist in einem dem eigentlichen Arbeitsgerät bzw. dem Rahmen abgewandten, vorzugsweise zumindest im Wesentlichen U-förmigen rückwärtigen Bereich des Holms schwenkbar vorgesehen. Das zweite Steuerelement ist an dem ersten Steuerelement beweglich, vorzugsweise ebenfalls schwenkbar vorgesehen. Das erste Steuerelement kann als ein Geschwindigkeitssteuerungselement ausgebildet sein, dass die Fahrgeschwindigkeit oder auch eine Arbeitsgeschwindigkeit des Arbeitsgeräts in Abhängigkeit von seiner Schwenkstellung beeinflusst. Bei dem zweiten Steuerelement handelt es sich um einen Anwesenheitsschalter bzw. das zweite Steuerelement kann einen solchen aufweisen oder als ein solcher wirken. Derartige Steuerelemente werden allgemein als Totmann-Schalter bezeichnet, da sie ein aktives Betätigen durch eine Bedienungsperson erfordern, um einen Betrieb des Arbeitsgeräts zuzulassen. Beispielsweise kann bei einem Loslassen des zweiten Steuerelements vorgesehen sein, dass das Arbeitsgerät bzw. sein Motor deaktiviert, das Getriebe ausgerückt, ein Arbeitsmittel, wie ein Mähbalken, eine Bürste etc. deaktiviert wird. Um einem unbeabsichtigten oder auch ungewollt starken Betätigen des oder der Steuerelemente entgegenzuwirken, können an dem/den Steuerelementen bzw. zwischen diesem/diesen und dem Holm in der Art eines Reibscheiben pakets ausgebildete Mittel vorgesehen sein, die einer Bewegung entgegenwirken.

Jedes der Steuerelemente oder auch beide Steuerelemente können in der Art von einteiligen oder auch mehrteiligen Bügeln ausgeführt sein, da solche einfach und kostengünstig in der Herstellung und Montage sind. Auch die Ausführung in der Art von geteilten Griffen oder Griffelementen ist günstig, da hier die Möglichkeit besteht, dass eine Bedienungsperson nur an einem der Griffe angreifen muss, um die gewünschte Funktion zu erzielen. Derartige Griffelemente können beispielsweise L- oder C-förmig oder in anderer Weise ergonomisch ausgestaltet sein.

Wenigstens eines der Steuerelemente kann mit dem Getriebe über eine Verbindung wirksam verbunden sein, um so beispielsweise eine Fahrgeschwindigkeit des Arbeitsgeräts zu beeinflussen. Hierzu kann das Getriebe beispielsweise als ein Zugmittel- oder Riemengetriebe oder auch als ein anderes variables Getriebe ausgebildet sein. Die Verbindung kann beispielsweise durch wenigstens ein Zug-Druck-Kabel gebildet werden. Es ist aber auch möglich eine elektrische, pneumatische oder hydraulische Verbindung vorzusehen.

An einem der Steuerelemente kann eine Führung vorgesehen sein, so dass bei einer Schwenkbewegung des Steuerelements oder der Steuerelemente eine Verbindung geführt und somit deren Funktion verbessert wird.

An dem Holm kann ein im Wesentlichen ortsfestes Halteelement vorgesehen sein. Eine Bedienungsperson kann an einem solchen angreifen, um die Stellung eines Steuerelements oder beider Steuerelemente, insbesondere bei Arbeiten auf unebenem Untergrund zu stabilisieren, wodurch beispielsweise eine gleichmäßigere Fahrgeschwindigkeit aufrechterhalten werden kann. Darüber hinaus wird auf diese Weise einer schnellen Ermüdung entgegengewirkt.

Besonders ergonomisch und somit bequem für eine Bedienungsperson ist es, wenn die Steuerelemente und/oder auch die Steuerelemente und das Griffelement in einer Betriebsstellung aneinander angrenzen, so dass sie durch die Bedienungsperson zumindest im Wesentlichen gemeinsam gehalten bzw. bedient werden können.

Hierzu ist es auch vorteilhaft, wenn sich die Steuerelemente bezogen auf das Arbeitsgerät zumindest im Wesentlichen nach oben erstrecken. Es ist aber auch eine abweichende Anordnung möglich.

Bei dem Arbeitsgerät kann es sich um jedes selbstfahrende bzw. handgeführte Arbeitsgerät handeln. Insbesondere ist das Arbeitsgerät aber als ein Gerät zur Rasen-, Garten- bzw. Grundstückspflege ausgeführt. Derartige Geräte sind beispielsweise Rasenmäher, Vertikutierer, Kehrmaschinen, Schneeräumgeräte, Gartenfräsen, Balkenmäher etc..

Um eine solche Steuerung bzw. ein erstes und ein zweites Steuerelement zu montieren, wird an einem Führungsholm oder Holm eines Arbeitsgeräts eine Steuerung, welche durch eine Bedienungsperson oder einen Benutzer betätigt werden kann, schwenkbar angebracht. Eine solche Steuerung weist wenigstens ein Bügelelement oder einen Bügel mit einem zumindest im Wesentlichen U-förmigen Endbereich auf, der an dem Holm in gegenüberliegenden Seitenbereichen schwenkbar angebracht wird. Die Steuerung wird mit einem Getriebe des Arbeitsgeräts über eine Verbindung, beispielsweise in der Art eines Zug-Druck-Kabels verbunden, es ist aber auch eine andere mechanische oder auch eine elektrische oder hydraulische/pneumatische Verbindung denkbar. Die Verbindung wirkt derart, dass wenn die Steuerung, vorzugsweise vorwärts, verschwenkt wird, an der Verbindung gezogen bzw. diese betätigt wird.

In der Zeichnung sind nachfolgend näher beschriebene Ausführungsbeispiele der Erfindung dargestellt. Es zeigt:
- Fig. 1: eine perspektivische Darstellung eines Arbeitsgeräts mit einer Geschwindigkeitssteuerung,
- Fig. 2A: eine Seitenansicht eines Teils eines Holms und der Steuerung in einer ersten, unbetätigten Stellung,
- Fig. 2B: eine perspektivische Darstellung der Steuerung und des Holms aus Fig. 2A,
- Fig. 3A: eine Seitenansicht des Holms und der Steuerung aus Fig. 2A in einer ersten, betätigten Stellung,
- Fig. 3B: eine perspektivische Darstellung der Steuerung und des Holms aus Fig. 3A,
- Fig. 4A: eine Seitenansicht des Holms und der Steuerung aus Fig. 2A in einer zweiten, betätigten Stellung,
- Fig. 4B: eine perspektivische Darstellung des Holms und der Steuerung aus Fig. 4A,
- Fig. 5A: eine Seitenansicht des Holms und der Steuerung entsprechend Fig. 2A in einer zweiten, unbetätigten Stellung,
- Fig. 6A-6C: Seitenansichten und perspektivische Darstellungen eines Teils des Holms und einer alternativen Ausführungsform einer Steuerung in einer unbetätigten Stellung,
- Fig. 7A-7C: Seitenansichten und perspektivische Darstellungen des in den Fig. 6A-6C gezeigten Holms und der Steuerung in einer ersten, betätigten Stellung,
- Fig. 8A-8C: Seitenansichten und perspektivische Darstellungen des in den Figuren 6A-6C gezeigten Holms und der Steuerung in einer zweiten, betätigten Stellung.
- Fig. 9A-9C: Seitenansichten und perspektivische Darstellungen des in den Fig. 6A-6C gezeigten Holms und der Steuerung in einer zweiten, unbetätigten Stellung,
- Fig. 10: eine perspektivische Darstellung eines rückwärtigen Endbereichs eines Holms in einer weiteren alternativen Ausführungsform,
- Fig. 11: eine Seitenansicht des in Fig. 10 gezeigten Holms mit einem ersten und einem zweiten Steuerelement in einer Neutralstellung,
- Fig. 12: eine Seitenansicht eines Holms ähnlich zu Fig. 11, wobei das erste Steuerelement sich in einer betätigten Stellung befindet und
- Fig. 13: eine Seitenansicht eines Holms ähnlich zu Fig. 12, wobei das erste Steuerelement nach vorwärts bewegt wurde und das zweite Steuerelement an dem ersten Steuerelement angrenzend gehalten wurde.

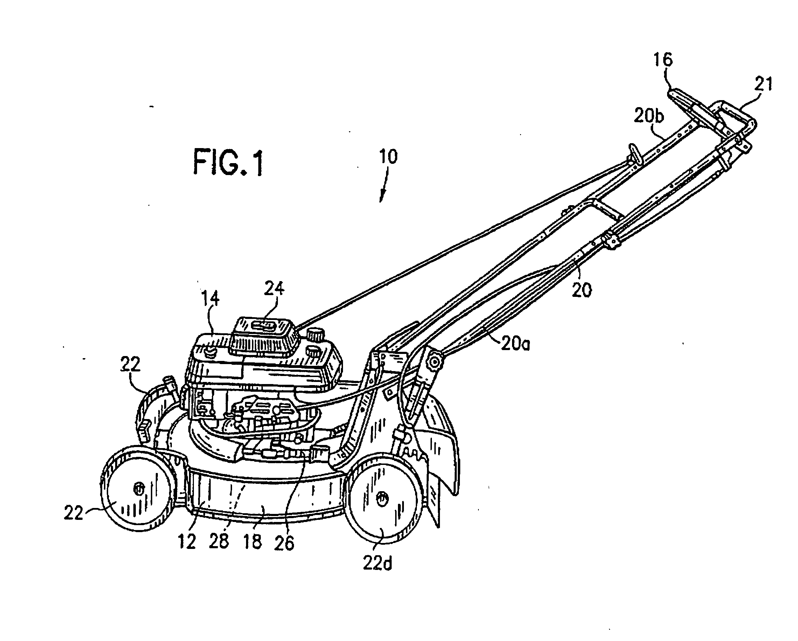

Bezugnehmend auf Fig. 1 wird eine perspektivische Ansicht eines Rasenmähers bzw. eines handgeführten Arbeitsgeräts 10 gezeigt, welches die Merkmale der vorliegenden Erfindung aufweist. Obwohl die vorliegende Erfindung mit Bezug auf die in der Zeichnung gezeigten Ausführungsformen beschrieben wird, sollte es deutlich werden, dass die vorliegende Erfindung in vielen unterschiedlichen Ausführungsformen ausgebildet werden kann.

Darüber hinaus könnte jede passende Größe, Form oder Art von Bauelementen oder Materialien verwendet werden.

Das Arbeitsgerät 10 weist im Wesentlichen einen Rahmen 12, einen Antrieb 14 und eine durch eine Bedienungsperson betätigbare Steuerung 16 auf. Obwohl die vorliegende Erfindung mit Bezug auf einen Rasenmäher dargestellt wird, könnte die vorliegende Erfindung in jede passende Art von handgeführtem, selbstfahrenden Arbeitsgerät integriert werden. Beispielsweise könnte die vorliegende Erfindung an einem Schneeräumgerät bzw. -gebläse, einer Gartenfräse oder jeder anderen Art von angetriebenem oder motorisiertem Arbeitsgerät verwendet werden. In dieser Ausführungsform weist der Rahmen 12 im Wesentlichen ein Mähwerk 18 und einen Holm 20 auf. Mit dem Mähwerk 18 sind Räder 22 verbunden. Der Holm 20 erstreckt sich von dem Mähwerk 18 nach oben und hinten. In einer bevorzugten Ausführungsform ist der Holm 20 mit dem Mähwerk 18 einstellbar verbunden. Der Holm 20 weist zwei U-förmige Griffelemente 20a, 20b auf, welche miteinander in Serie verbunden sind, um einen steifen Griffzusammenbau zu bilden. Dieser steife Griffzusammenbau kann mit dem Mähwerk 18 ortsfest oder er könnte mit dem Mähwerk 18 leicht beweglich verbunden sein. In alternativen Ausführungsformen könnte jede passende Art, Form oder Größe an Griffzusammenbau vorgesehen werden. Das Arbeitsgerät 10 könnte auch einen Grassfangbehälter aufweisen, welcher an dem Holm 20 und an einer Auswurföffnung des Mähwerks 18 angebracht ist.

Der Antrieb 14 weist einen Motor 24 und ein Antriebsradgetriebe bzw. ein Getriebe 26 auf. In dieser Ausführungsform ist der Motor 24 in der Art eines Verbrennungsmotors ausgeführt. Der Motor 24 könnte jedoch durch jede passende Art von Motor gebildet werden, beispielsweise durch einen Elektromotor. Der Motor 24 umfasst eine Antriebswelle, welche mit einem Schneidmesser bzw. einem Messerbalken 28 in Verbindung steht. Der Messerbalken 28 ist unterhalb des Mähwerks 18 angeordnet. Das Getriebe 26 ist auch mit dem Motor 24 verbunden. Das Getriebe 26 ist zwischen dem Motor 24 und wenigstens einem antreibbaren Rad 22d geschaltet. Im Stand der Technik sind viele verschiedene Arten von Getrieben bekannt. Es könnte jede passende Art von Getriebe zwischen dem Motor 24 und dem antreibbaren Rad 22d vorgesehen werden.

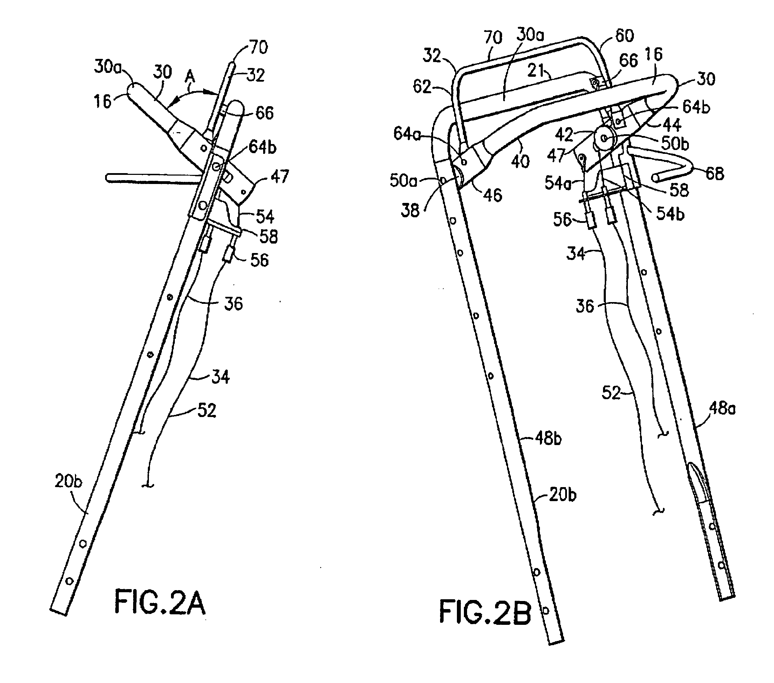

Die Steuerung 16 ist mit einem oberen, rückwärtigen Endbereich des Holms 20 verbunden. Es wird nun auch Bezug auf die Figuren 2A und 2B genommen, in welchen ein oberes Griffelement 20b dargestellt ist, wobei die durch eine Bedienungsperson betätigbare Steuerung 16 in einer unbetätigten oder AUS-Stellung gezeigt wird. In dieser Ausführungsform weist die Steuerung 16 im Wesentlichen ein Geschwindigkeitssteuerungselement bzw. ein erstes Steuerelement 30, eine Totmann-Schaltung oder einen Anwesenheitsschalter bzw. ein zweites Steuerelement 32, eine erste Verbindung 34, eine zweite Verbindung 36 und eine Bewegungswiderstandseinrichtung bzw. ein Reibscheibenpaket 38 auf. In alternativen Ausführungsformen könnte die Steuerung andere oder zusätzliche Bauelemente aufweisen. Das Steuerelement 30 weist im Wesentlichen ein U-förmiges Bauelemente bzw. einen Bügel 40 und eine Führung 42 auf. Der Hebel oder Bügel 40 weist zwei Schenkel 44, 46 auf. Die Schenkel 44, 46 sind mit gegenüberliegenden Seitenbereichen 48a, 48b des Griffelements 20b schwenkbar verbunden. In der vorliegenden Ausführungsform ist der erste Schenkel 44 länger ausgebildet als der zweite Schenkel 46. Ein Endbereich 47 des ersten Schenkels 44 erstreckt sich über ein Schwenklager des ersten Schenkels 44 an einem Seitenbereich 48a des Holms 20. Der Bügel 40 bildet somit einen Hebel. In alternativen Ausführungsformen könnte der Bügel 40 in Form eines Henkels, eines oder zweier "L" eines oder zweier "C" oder eines Rings (eventuell mit beabstandeten Endbereichen) ausgebildet sein. Wie auch immer könnte das erste Steuerelement 30 in alternativen Ausführungsformen Bauelemente jeder passenden Größe, Form und Art aufweisen. Das erste Steuerelement 30 könnte an dem Holm 20 auch in einer passenden Art und Weise beweglich angebracht sein.

Die Bewegungswiderstandseinrichtung weist in der vorliegenden Ausführungsform ein Reibscheibenpaket 38 auf. Dieses Reibscheibenpaket 38 ist zwischen dem zweiten Schenkel 46 und dem Seitenbereich 48b des Holms 20 gequetscht. In der vorliegenden Ausführungsform ist das Reibscheibenpaket 38 auf einen Schwenkbolzen 50a aufgesetzt, welcher den Schenkel 46 mit dem Seitenbereich 48b verbindet. Das Reibscheibenpaket 38 stellt einen erhöhten Reibwiderstand gegenüber einer Bewegung des ersten Steuerelements 30 mit Bezug auf den Holm 20 zur Verfügung. Diese Erhöhung des Widerstands gegenüber einer Bewegung des ersten Steuerelements 30 bezogen auf den Holm 20 hat sich bei einem auf dem Untergrund fahrenden Arbeitsgerät 10, wie einem Rasenmäher, aufgrund von Problemen als günstig erwiesen, welche bei Untergrundunregelmäßigkeiten oder Bodenunebenheiten, wie kleinen Löchern oder Erhebungen auf die das Arbeitsgerät 10 trifft, auftreten können. Ohne das Reibscheibenpaket 38 kann ein Rütteln des Holms 20, wenn das Arbeitsgerät 10 auf unebenes oder raues Gelände trifft, ein unbeabsichtigtes stärkeres Bewegen des ersten Steuerelements 30 bewirken. Ein Vorsehen des Reibscheibenpakets 38 trägt dazu bei, eine solche unbeabsichtigte Bewegung wesentlich zu reduzieren. Auf diese Weise können unbeabsichtigte Geschwindigkeitsänderungen des Arbeitsgeräts 10 über den Untergrund verringert werden.

Der gegenüberliegende Schenkel 44 des Bügels 40 ist mit einem Seitenbereich 38a des Holms 20 über einen Schwenkzapfen 48a schwenkbar verbunden. In der vorliegenden Ausführungsform ist die Führung 42 an dem Bügel 40 und dem Griffelement 20b über den Schwenkzapfen 50b angebracht. Die Führung 42 ist im Wesentlichen radförmig. Der äußere Umfang der Führung 42 weist eine umlaufende Nut auf. In alternativen Ausführungsformen könnte jedoch jede passende Führungsart vorgesehen sein. Alternativ könnte die Führung 42 nicht vorgesehen sein. Ein Draht 54b könnte um die Führung 42 geschlungen sein, und die Führung 42 könnte drehbar vorgesehen sein.

Die ersten und zweiten Verbindungen 34, 36 sind im Wesentlichen gleich ausgebildet. Jede Verbindung 34, 36 weist einen äußeren Mantel 52, ein Seele bzw. einen inneren Draht 54, welcher von dem Mantel 52 umgeben ist, und Befestigungsmittel 56 auf. Die Befestigungsmittel 56 sind ortsfest mit einem vorderen und einem rückwärtigen Endbereich der äußeren Mäntel 52 verbunden. Die inneren Drähte 54 können sich in den Mänteln 52 und den Befestigungsmitteln 56 in Längsrichtung verschieben. Die Befestigungsmittel 56 in dem rückwärtigen Endbereich der Verbindungen 34, 36 sind ortsfest mit einem Halter 58 verbunden. In der gezeigten Ausführungsform weist der Halter 58 darüber hinaus einen Griff bzw. ein Halteelement 68 auf. Das Halteelement 68 ist im Wesentlichen L-förmig und erstreckt sich nach vorn. In einer alternativen Ausführungsform könnte jedoch jede passende Art von Halteelement und Befestigungssystem des Halteelements an dem Holm 20 vorgesehen werden. Alternativ könnte der Holm 20 kein Halteelement aufweisen. Ein rückwärtiger Endbereich des inneren Drahtes 54a der ersten Verbindung 34 ist mit dem Endbereich 47 des U-förmigen ersten Schenkels 44 verbunden. Der vordere Endbereich des inneren Drahtes 54a ist mit dem Getriebe 26 verbunden, welches eine Zugmittelscheibe aufweisen kann, welche, um die Spannung auf ein Zugmittel bzw. einen Riemen zwischen dem Motor 24 und dem angetriebenen Rad 22d zu erhöhen oder zu senken, bewegt werden kann.

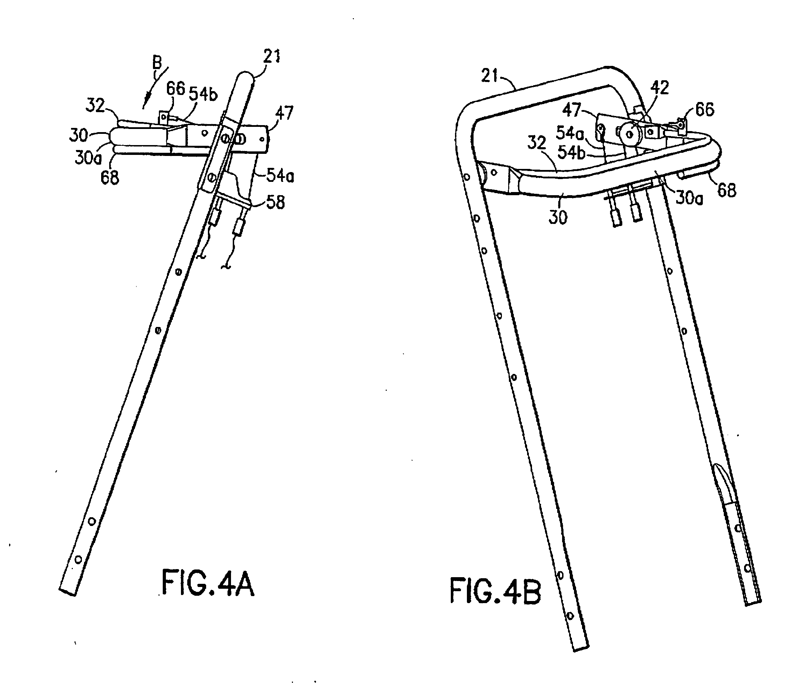

Ein rückwärtiger Endbereich des inneren Drahtes 54b der zweiten Verbindung 36 ist mit dem zweiten Steuerelement 32 (siehe Fig. 4A und 4B) verbunden. Der rückwärtige Endbereich des Drahtes 54b erstreckt sich von seinem Befestigungsmittel 56 entlang dem Grund und dem rückwärtigen Seitenbereich der Vertiefung oder Nut in der Führung 42. Der Draht 54b ist mit einem Anwesenheitssystem an dem Motor 24 verbunden, welches beispielsweise in der Art einer Bremse ausgeführt sein kann, welche Bremskraft an ein Schwungrad des Motors 24 anlegen kann. Der vordere Endbereich des inneren Drahtes 54b ist mit einer Bremse verbunden, um das Schwungrad oder den Motor 24 anzuhalten. Der vordere Endbereich des inneren Drahtes 54b kann mit einem Motorabschaltschalter oder einem System verbunden sein, welches den Messerbalken 28 derart von dem Motor 24 trennt, dass er nicht mehr angetrieben wird. In abweichenden Ausführungsformen könnte jede passende Größe, Gestalt oder Art von Verbindungen vorgesehen werden. Wenn der Anwesenheitsschalter 32 sich in seiner AUS-Stellung befindet, ist das Anwesenheitssystem in einer AUS-Stellung und hindert das Arbeitsgerät 10 daran, Gras zu schneiden bzw. zu arbeiten.

Das zweite Steuerelement 32 ist beweglich mit dem ersten Steuerelement 30 verbunden. In der vorliegenden Ausführungsform ist das zweite Steuerelement 32 als ein Hebel oder Bügel ausgeführt und weist ein einteiliges, im Wesentlichen U-förmiges Element auf. In einer alternativen Ausführungsform könnte das zweite Steuerelement 32 jede passende Größe oder Form annehmen oder könnte mehr als ein Element aufweisen. Der Anwesenheitsschalter 32 weist Schenkel 60, 62 auf, welche mit dem U-förmigen Bügel 40 über Schwenkbolzen 64a, 64b schwenkbar verbunden sind. In alternativen Ausführungsformen könnte das zweite Steuerelement 32 beweglich mit dem ersten Steuerelement 30 in jeder passenden Art und Weise verbunden sein. Der Endbereich des Drahtes 54b ist mit dem Schenkel 60 über ein Befestigungsmittel 66 verbunden.

Wie oben angeführt, wird die durch eine Bedienungsperson betätigbare Steuerung 16 in den Figuren 2A und 2B in einer nicht betätigten oder AUS-Stellung gezeigt. In dieser unbetätigten Stellung ist ein vorderer Zentralbereich 30a des Geschwindigkeitssteuerungselements 30 in einer nach oben gerichteten Stellung und der Endbereich 47 des Schenkels 44 in einer nach unten gerichteten Stellung angeordnet. Der vordere Zentralbereich 30a erstreckt sich auch nach vorn. Der Draht 54a ist gespannt; beispielsweise dadurch, dass eine an dem Getriebe 26 vorgesehene Feder daran zieht. Somit zieht der Draht 54a an dem Endbereich 47. Die durch den Draht 54a auf den Endbereich 47 ausgeübte Kraft ist aufgrund der Reibungskräfte, welche durch das Reibscheibenpaket 38 ausgeübt werden, vorzugsweise nicht ausreichend, um das erste Steuerelement 30 zu bewegen. In einer bevorzugten Ausführungsform muss das erste Steuerelement 30 manuell durch eine Bedienungsperson bewegt werden, um den Draht 54a zu bewegen.

In dieser unbetätigten Stellung weist auch das zweite Steuerelement 32 einen Zentralbereich 70 auf, welcher in einer nach oben gerichteten Stellung angeordnet ist. Dieser Zentralbereich 70 ist jedoch vom dem Zentralbereich 30a beabstandet. Dies ist deshalb der Fall, damit das zweite Steuerelement 32 um einen Winkel A, wie dies in Fig. 2A gesehen werden kann, versetzt angeordnet ist. Der Winkel A beträgt ungefähr 70°. Es könnte aber jeder passende Winkel vorgesehen werden. Der Draht 54b steht beispielsweise dadurch unter Spannung, dass eine an dem Motor 24 vorgesehene Feder an ihm zieht. Die durch den Draht 54b auf das zweite Steuerelement 32 aufgebrachte Kraft ist ausreichend, um das zweite Steuerelement 32 in Richtung seiner unbetätigten Stellung zu belasten. Um das zweite Steuerelement 32 aus seiner unbetätigten Stellung zu bewegen, muss eine Bedienungsperson eine ausreichende Kraft aufwenden, um die Kraft zu überwinden, welche durch den federbelasteten Draht 54b aufgebracht wird. In alternativen Ausführungsformen könnte jede passende Art von Einrichtung verwendet werden, um das zweite Steuerelement 32 in Richtung seiner unbetätigten Stellung zu belasten.

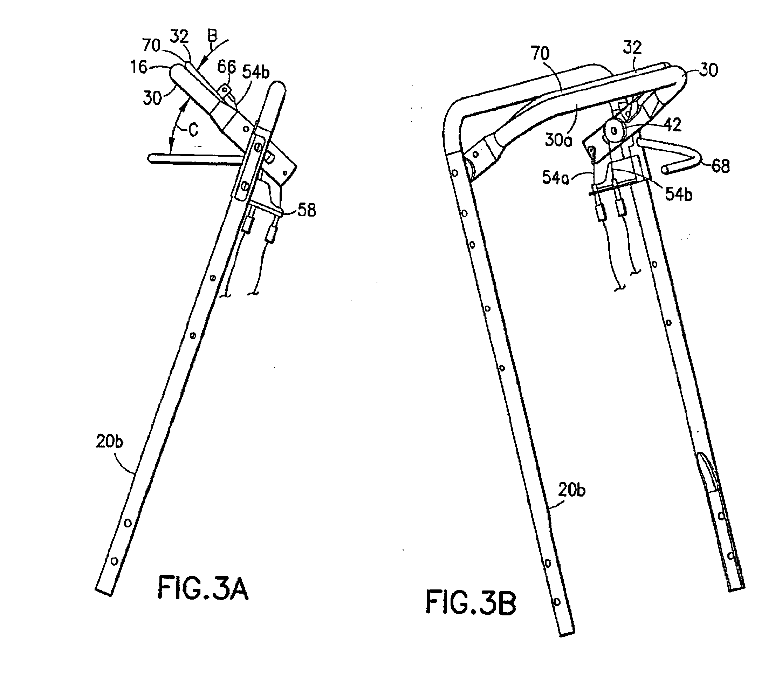

Es wird nun auch auf die Figuren 3A und 3B Bezug genommen, in denen das Griffelement 20b und die durch eine Bedienungsperson betätigbare Steuerung 16 derart gezeigt werden, dass die Steuerung 16 in eine Betriebs- oder EIN-Stellung bewegt wurde.

In dieser ersten Stellung hat eine Bedienungsperson das zweite Steuerelement 32 nach vorn gedrückt, um den Zentralbereich 70 des Anwesenheitsschalters bzw. des zweiten Steuerelements 32 nach vorn zu drehen, wie dies durch den Pfeil B dargestellt wird. Der Zentralbereich 70 liegt an dem Zentralbereich 30a an. Da das Befestigungsmittel 66 mit dem zweiten Steuerelement 32 bewegt wird, wird an dem Draht 54b gezogen. Die Führung 42 trägt dazu bei, den Draht 54b zu führen, während das Befestigungsmittel 66 entlang seines bogenförmigen Pfades bewegt wird. Da der Draht 54b nach hinten aus dem rückwärtigen Endbereich des Mantels 52 gezogen wird, wird auch der vordere Endbereich des Drahtes 54b nach rückwärts in den Mantel 52 hineingezogen. Dadurch kann ein Schalter oder ein anderer passender Mechanismus in dem Anwesenheitssystem in eine EIN-Stellung gebracht werden, um es einer Bedienungsperson zu erlauben, das Arbeitsgerät 10 vollständig zu nutzen (beispielsweise: Lösen einer Schwungradbremse).

In dieser ersten wirksamen Arbeitsstellung wurde das erste Steuerelement 30 noch nicht aus seiner deaktivierten oder neutralen Stellung bewegt. Das Getriebe 26 befindet sich in einer Neutralstellung, wenn das erste Steuerelement 30 seine unbetätigte Stellung einnimmt. In dieser Neutralstellung wird keine Antriebskraft von dem Motor 24 an das angetriebene Rad/die angetriebenen Räder 22d übertragen. Das erste Steuerelement 30 kann vorwärts bewegt werden, um an dem Draht 54a zu ziehen und das Getriebe 26 aus seiner Neutralstellung in eine Fahrstellung zu bringen.

Es wird nun auch auf die Figuren 4A und 4B Bezug genommen, in denen die durch eine Bedienungsperson betätigbare Steuerung 16 in einer zweiten Arbeits- oder EIN-Stellung gezeigt wird. In dieser zweiten Stellung hat eine Bedienungsperson sowohl das zweite Steuerelement 32 und das erste Steuerelement 30 nach vorn gedrückt, um beide Zentralbereiche 30a und 70 nach vorn und unten zu drehen, wie dies durch den Pfeil B gezeigt wird. Diese zweite Stellung stellt für beide Elemente 30, 32 eine vollständig betätigte Stellung dar. Die beiden Elemente 30, 32 erstrecken sich nun beide in einer im Wesentlichen gerade nach vorn gerichteten Richtung. In alternativen Ausführungsformen jedoch könnten die beiden Steuerelemente 30, 32 leicht nach oben oder unten abgewinkelt sein. Das erste Steuerelement 30 wurde an das Griffelement 68 heran bewegt. Dies erlaubt es einer Bedienungsperson, die drei Elemente 30, 32 und 68 mit einer einzigen Hand zu fassen. In einer bevorzugten Ausführungsform wurde das erste Steuerelement 30 jedoch nur in seine maximal nach vorn geschwenkte Stellung gebracht, wenn das Arbeitsgerät und die Bedienungsperson einen steilen Hang mit hoher Geschwindigkeit erklimmen würden. Es könnte aber jede passende Geschwindigkeit in Abhängigkeit von der Stellung des ersten Steuerelements 30 vorgesehen werden.

Wenn der Zentralbereich 30a des ersten Steuerelements 30 nach vorn geschwenkt wird, wird der Endbereich 47 nach oben und hinten geschwenkt. Dies bewirkt, dass der Draht 54a aus seinem Mantel 52 gezogen wird. Wie oben angemerkt, ist der vordere Endbereich des Drahtes 54a mit dem Getriebe 26 verbunden. Wenn an dem Draht 54a durch das erste Steuerelement 30 gezogen wird, betätigt dies das Getriebe 26, um Antriebskraft von dem Motor 24 an die angetriebenen Räder 22d zu übertragen. In der vollständig betätigten zweiten Arbeitsstellung, welche in den Figuren 4A und 4B gezeigt wird, wird das Getriebe 26 in seine vollständig betätigte Stellung bewegt. Somit ist das angetriebene Rad 22d vollständig mit dem Motor 24 über das Getriebe 26 verbunden. Das Arbeitsgerät 10 kann dann mit voller Geschwindigkeit über den Untergrund bewegt werden.

In einer bevorzugten Ausführungsform ist das Getriebe 26 ein Getriebe mit variabler Geschwindigkeit. Der Anteil oder die Menge an Antriebskraft, welche von dem Motor 24 an die angetriebenen Räder übertragen wird, hängt von der Stellung des Drahtes 54a ab. Somit kann die Drehgeschwindigkeit der angetriebenen Räder 22d zwischen einer Neutral- und einer Maximalgeschwindigkeit, in Abhängigkeit von der Winkelstellung des ersten Steuerelements 30 variieren, wenn das erste Steuerelement 30 über den Winkel C (siehe Fig. 3A) aus seiner Neutralstellung, welche in Fig. 3A gezeigt wird, in seine Maximalgeschwindigkeitsstellung entsprechend Fig. 4A geschwenkt wird. Die Geschwindigkeit des Arbeitsgeräts 10 auf dem Untergrund kann somit durch die Winkelstellung des ersten Steuerelements 30 bezogen auf den Holm 20 gesteuert werden.

Wenn die Geschwindigkeit des Arbeitsgeräts 10 zu hoch für die Gehgeschwindigkeit der Bedienungsperson ist, da die Bedienungsperson das erste Steuerelement 30 greift, um das zweite Steuerelement 32 bequem betätigen zu können, wird sich der Zentralbereich 30a des ersten Steuerelements 30 nach oben und rückwärts drehen, wenn der Holm 20 beginnt, sich von der Bedienungsperson wegzubewegen. Somit kann die Steuerung 16 die Geschwindigkeit des Arbeitsgeräts 10 automatisch einstellen oder verringern, wenn die Gehgeschwindigkeit der Bedienungsperson geringer ist als die Geschwindigkeit des Arbeitsgeräts 10 auf dem Untergrund. Dies kann erfolgen, ohne das eine bewusste Anstrengung oder ein Gedanke durch die Bedienungsperson aufgewendet werden muss.

Die Steuerung 16 kann die Geschwindigkeit des Arbeitsgeräts 10 auch automatisch erhöhen, wenn die Bedienungsperson eine schnellere Geschwindigkeit wünscht, indem die Bedienungsperson nur das erste Steuerelement 30 nach vorn drückt. Diese Nach-Vorn-Drückende-Bewegung oder Kraft bewirkt, dass der obere Endbereich des ersten Steuerelements 30 sich nach vorn dreht. Wenn sich das erste Steuerelement 30 nach vorn dreht, erhöht sich die Geschwindigkeit der angetriebenen Räder 22d.

Die Steuerung 16 entsprechend der vorliegenden Erfindung erhöht die Geschwindigkeit des Arbeitsgeräts 10, wenn die Lücke oder der Winkel zwischen dem ortsfesten Halteelement 68 und dem ersten Steuerelement 30 verringert wird. Somit erhöht die Steuerung 16 die Geschwindigkeit der Räder 22d, wenn die Lücke zwischen einem rückwärtigen Zentralbereich 21 des Griffelements 20b und dem ersten Steuerelement 30 sich vergrößert. Entsprechend verringert die Steuerung 16 die Geschwindigkeit des Arbeitsgeräts 10, wenn die Lücke oder der Winkel zwischen dem ortsfesten Haltegriff 68 und dem ersten Steuerelement 30 vergrößert wird und wenn die Lücke zwischen dem rückwärtigen Zentralbereich 21 des Griffelements 20b und dem ersten Steuerelement 30 sich verringert.

Während einer Drehung des Arbeitsgeräts 10 erlaubt dies den Händen einer Bedienungsperson (wobei eine auf dem ersten Steuerelement 30 und eine auf dem rückwärtigen Zentralbereich 21 des Griffelements 20b angeordnet ist) weiter auseinander angeordnet zu sein, um das Drehmoment auf das Arbeitsgerät 10 zu erhöhen. Darüber hinaus ist es nötig, die vorderen Räder 22 eines Arbeitsgeräts 10, wie eines Rasenmähers, welches vordere Räder aufweist, die nur um eine Achse drehen (beispielsweise keine Nachlaufräder sind), während einer Drehung vom Boden abzuheben. Um dies zu tun, drückt die Bedienungsperson den rückwärtigen Zentralbereich 21 nach unten, um die vorderen Räder 22 nach oben zu verschwenken.

Da die Bedienungsperson den rückwärtigen Zentralbereich 21 des Holms 20 nach unten drücken kann, anstatt die durch eine Bedienungsperson betätigbare Steuerung 16 zu drücken, um denn vorderen Bereich des Arbeitsgeräts 10 anzuheben, wird die Geschwindigkeit des Geschwindigkeitssteuerungssystems sich nicht automatisch verändern, wenn der Holm 20 nach unten gedrückt wird. Eine Hand kann die Steuerung 16 unabhängig davon einstellen, ob die andere Hand den rückwärtigen Zentralbereich 21 nach unten drückt. Dies überwindet das Problem des Standes der Technik, wie er beispielsweise in dem US Patent Nr. 6,082,083 beschrieben wird, wobei, um die vorderen Räder 22 des Arbeitsgeräts 10 für eine Drehung anzuheben, die Bedienungsperson einen beweglichen Haltegriff nach unten drücken muss, wodurch die Geschwindigkeit des Arbeitsgeräts automatisch erhöht und es notwendig wird, dass die Bedienungsperson den beweglichen Haltegriff zurückzieht, um die Geschwindigkeit zu verringern.

Die vorliegende Erfindung überwindet dieses Problem, indem dem rückwärtigen Zentralbereich 21 des Holms 20 erlaubt wird, durch die Hände der Bedienungsperson nach unten gedrückt zu werden, um das Arbeitsgerät 10 zu drehen, ohne dass die Bedienungsperson die Steuerung 16 automatisch nach unten drückt. Tatsächlich könnte die Bedienungsperson die Steuerung 16 mit einer Hand leicht freigeben (um die Geschwindigkeit des Arbeitsgeräts 10 zu verringern), während sie mit der anderen Hand den rückwärtigen Zentralbereich des Holms 20 bzw. des Griffelements 20b nach unten drückt. Dies erhöht die Kontrolle der Bedienungsperson über das Arbeitsgerät 10 erheblich.

Bei der vorliegenden Erfindung handelt es sich bei der Fahrsteuerung nicht nur um eine rein digitale Art von EIN/AUS Steuerung. Stattdessen ist die Fahrsteuerung der vorliegenden Erfindung als eine variable Steuerung ausgebildet. Die Geschwindigkeit des Fahrsteuerungssystems wird in Abhängigkeit von der Winkelstellung des Steuerbügels bzw. des ersten Steuerelements 30 bezogen auf das ortsfeste Griffelement 20b verändert. In einer alternativen Ausführungsform könnten Merkmale der vorliegenden Erfindung an nicht variablen Arten von AN/AUS Fahrsteuerungssystemen eingesetzt werden.

In dieser Ausführungsform wurde das zweite Steuerelement 32 derart dimensioniert ausgebildet und mit Bezug auf das erste Steuerelement 30 ausgerichtet, dass das zweite Steuerelement 32 bei dem ersten Steuerelement 30 verbleiben kann, wenn das erste Steuerelement 30 aus seiner unbetätigten Stellung in eine vollständig betätigte Stellung gebracht wird. Wie es bei einem Vergleich der Fig. 3A bis 4A gesehen werden kann, bewegt sich das zweite Steuerelement 32 mit Bezug auf das erste Steuerelement 30 zwischen diesen beiden Stellungen nicht. Das Befestigungsmittel 66 bewegt sich bezogen auf den Halter 58, aber die Führung 42 stellt einen Leitpfad für den Draht 54b zur Verfügung. Das Anwesenheitssystem verbleibt betätigt zwischen den ersten und den zweiten Stellungen, wie in den Figuren 3A und 4A gezeigt wird.

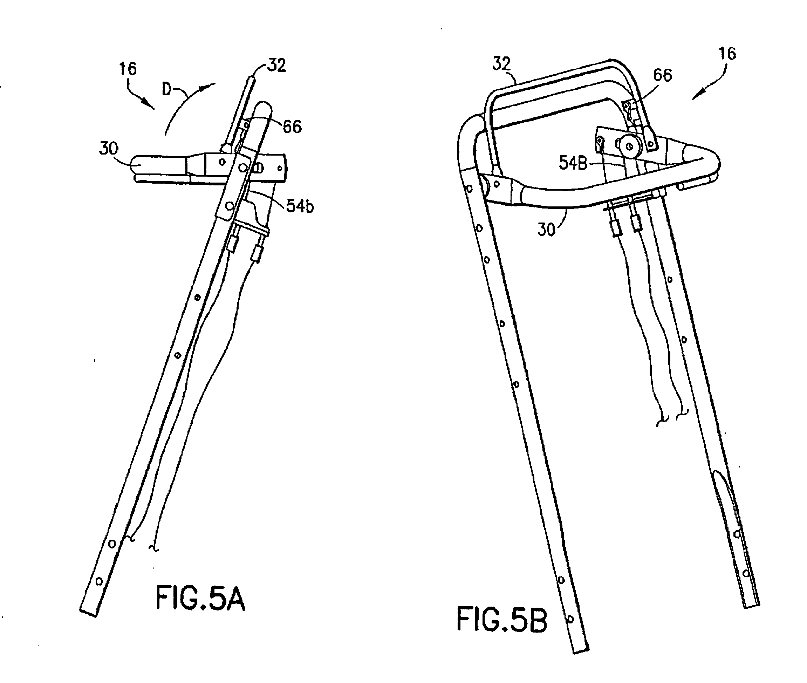

Es wird nun auch auf die Fig. 5A und 5B Bezug genommen, in denen die Steuerung 16 in einer anderen Stellung dargestellt ist. Diese Stellung entspricht einer Situation, in der das erste Steuerelement 30 in seine vollständig betätigte Stellung bewegt wurde, die Bedienungsperson das zweite Steuerelement 32 aber freigegeben hat. Selbst wenn das erste Steuerelement 30 sich in seiner vollständig betätigten Stellung befinden, zieht der Draht 54b an dem Befestigungsmittel 66, wenn die Bedienungsperson das zweite Steuerelement 32 loslässt. Diese Kraft bewirkt, dass das zweite Steuerelement 32 nach oben und hinten in seine unbetätigte oder AUS-Stellung dreht, wie dies durch den Pfeil D angedeutet wird. Der Draht 54b kehrt somit in seine deaktivierte oder AUS-Stellung zurück und das Anwesenheitssystem kehrt in seine AUS-Stellung zurück, um den Motor 24 beispielsweise durch ein Unterbinden des Zündens einer Zündkerze abzuschalten und/oder eine Schwungradbremse des Motors 24 zu betätigen, oder das Getriebe zwischen dem Motor 24 und dem Messerbalken 28 zu trennen und/oder das angetriebene Rad 22 am Drehen, beispielsweise durch ein Anlegen einer Bremse, zu hindern. Es könnte jedoch jede passende Art von Anwesenheitssystem vorgesehen werden. Obwohl sich das erste Steuerelement 30 in seiner vollständig betätigten Stellung befindet, wird das Arbeitsgerät 10 sich nicht vorwärts bewegen.

Die Geschwindigkeitssteuerungseinrichtung der vorliegenden Erfindung arbeitet, indem die Bedienungsperson oder der Benutzer sich auf seinem oder ihrem individuellen Weg bewegt und gegen die beweglichen Steuerelement 30, 32 drückt. Dies wiederum rückt den Fahrantrieb proportional dazu ein, wie schnell die Bedienungsperson geht. Die vorliegende Erfindung stellt ein System mit einem ersten Steuerungselement 30 und einem Anwesenheitsschalter bzw. einem zweiten Steuerelement 32 zur Verfügung, welche nach vorn und hinten schwenken. Dies erlaubt es, dass eine Hand eines der Steuerelemente 30, 32 bzw. den Bügel 40 bewegt, während die andere Hand an dem Holm 20 angreift, um ein Wenden zu vereinfachen. Die vorliegende Erfindung kann auch einen Stabilisierungsgriff oder ein Halteelement 68 auf der rechten und/oder linken Seite verwenden, um die Kontrolle des Arbeitsgeräts 10 und der Steuerung 16 auf rauem Untergrund zu stabilisieren. Die Fähigkeit eine Hand auf dem ersten Steuerelement 30 und die andere Hand auf dem Holm 20 zu nutzen, erlaubt ein leichteres Wenden und verbessert eine Stabilisierung der Geschwindigkeit. Zur Unterstützung kann die Bedienungsperson an dem ersten Steuerelement 30 oder an dem ersten Steuerelement 30 und dem Holm 20 ziehen. Die vorliegende Erfindung bietet der Bedienungsperson mehrer Möglichkeiten, um an dem Holm 20 und der Steuerung 16 anzugreifen und verbessert somit die Steuerung bzw. die Kontrolle für einen größeren Anteil an Benutzern. Ein Reibwiderstand gegen eine Bewegung des ersten Steuerelements 30 wurde vorgesehen, um das erste Steuerelement 30 daran zu hindern, sich zu leicht zu bewegen.

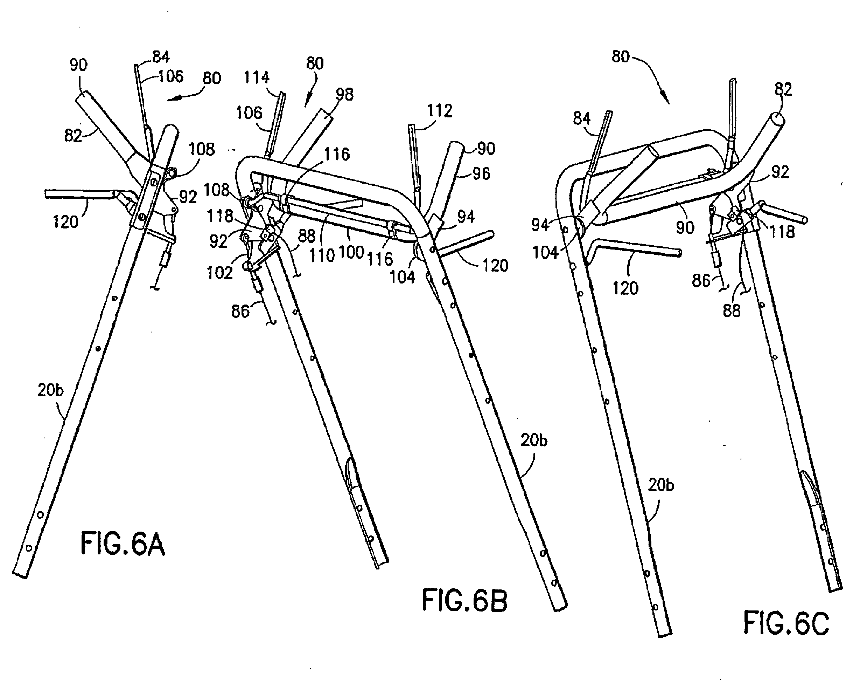

Es wird nun auf die Figuren 6A - 6C Bezug genommen, in denen eine alternative Ausführungsform der vorliegenden Erfindung gezeigt wird. In dieser Ausführungsform weist die durch eine Bedienungsperson betätigbare Steuerung 80 im Wesentlichen ein erstes Steuerelement 82, einen Anwesenheitsschalter bzw. ein zweites Steuerelement 84 und zwei Verbindungen 86, 88 auf. Das erste Steuerelement 82 weist im Wesentlichen einen U-förmigen Bügel 90 und zwei seitliche Anbauhalter 92, 94 auf. Der U-förmige Bügel 90 weist im Wesentlichen zwei Schenkel 96, 98 und einen Zentralbereich 100 auf. Die Anbauhalter 92, 94 sind fest an dem U-förmigen Bügel 90 an Anschlussstellen oder Übergängen zwischen dem Zentralbereich 100 und den Schenkeln 96, 98 angebracht.

Die Anbauhalter 92, 94 sind schwenkbar mit dem Griffelement 20b verbunden. Der Anbauhalter 92 erstreckt sich von dem U-förmigen Bügel 90 nach unten und hinten. Ein Kabel oder Draht 102 der Verbindung 96 ist an einem Endbereich des Anbauhalters 92 angebracht. Ein Reibscheibenpaket 104 ist zwischen dem Anbauhalter 94 und dem Griffelement 20b vorgesehen.

Das zweite Steuerelement 84 weist im Wesentlichen einen U-förmigen Bügel 106 und ein Befestigungsmittel 108 auf. Der U-förmige Bügel 106 weist im Wesentlichen einen Zentralbereich 110 und zwei Schenkel 112, 114 auf. Der Zentralbereich 110 ist mit dem Zentralbereich 100 über Halter 116 drehbar verbunden. In alternativen Ausführungsformen könnte jedes passende System verwendet werden, um die zwei Bügel 106, 90 beweglich aneinander anzubringen. Das Befestigungsmittel 108 ist mit einem Kabel oder Draht der Verbindung 88 verbunden. Der Draht erstreckt sich durch einen Führungshalter bzw. eine Führung 118 an dem Befestigungsmittel 92. Das Griffelement 20b weist ein ortsfestes Halteelement 102 auf rechten und linken Seiten des Holms 20 auf. Die Halteelemente 102 erstrecken sich im Wesentlichen in gerader Richtung vorwärts.

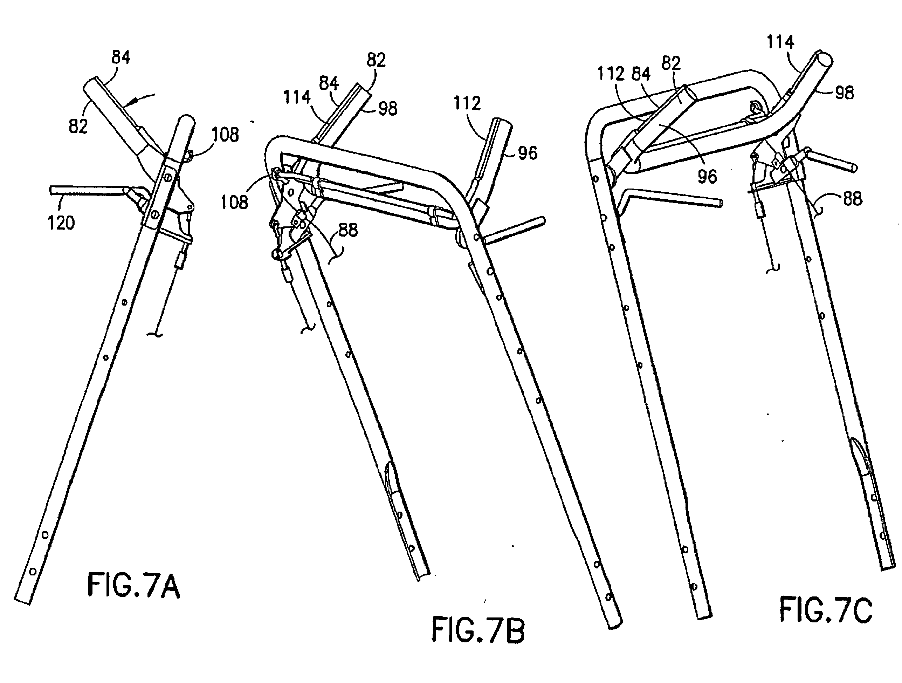

Die Figuren 6A - 6C zeigen die durch eine Bedienungsperson betätigbare Steuerung 80 in einer vollständig deaktivierten Stellung ähnlich zu der in den Figuren 2A - 2B dargestellten. In der vorliegenden Ausführungsform jedoch erstrecken sich die Schenkel des ersten Steuerelements 82 und des zweiten Steuerelements 84 im Wesentlichen nach oben und vorn. Die Schenkel 96, 98, 112, 114 erstrecken sich auch nach innen aufeinander zu. Es wird nun auch auf die Figuren 7A-7C Bezug genommen, in denen die Steuerung 80 in einer ersten durch eine Bedienungsperson betätigten oder EIN-Stellung gezeigt wird. Diese ist ähnlich zu der in den Figuren 3A und 3B gezeigten ersten durch eine Bedienungsperson betätigten Stellung. In dieser Stellung wurde das zweite Steuerelement 84 an dem ersten Steuerelement 82 in eine Vorwärtsrichtung gedreht. Die Schenkel 112, 114 liegen nun an Rückseiten der Schenkel 96, 98 an. Der Draht in der Verbindung 88 wurde durch das Befestigungsmittel 108 nach rückwärts und oben bewegt. Dadurch kann das Anwesenheitssystem an dem Motor 24 in eine deaktivierte oder AUS-Stellung bewegt werden. Das erste Steuerelement 82 ist so in einer deaktivierten Stellung angeordnet, dass das Getriebe 26 an dem Motor 24 in einer Neutralstellung angeordnet ist. Diese Stellung wird üblicherweise verwendet, wenn das Arbeitsgerät 10 angelassen oder wenn das Arbeitsgerät 10 mit dem Getriebe 26 in eine Neutralstellung bewegt wird.

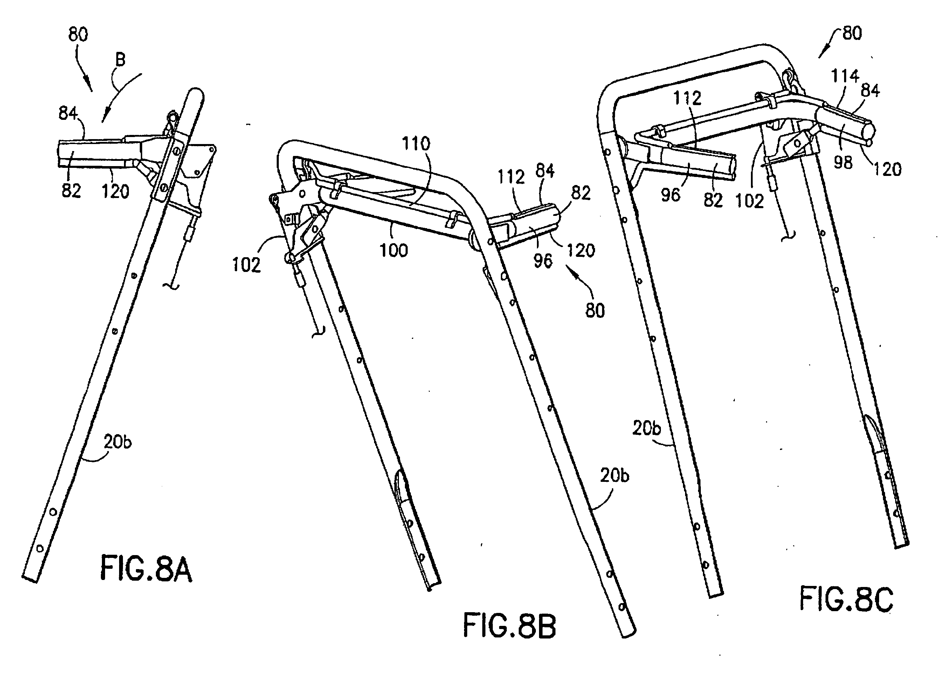

Es wird nun auch auf die Figuren 8A-8C Bezug genommen, in denen die Steuerung 80 in einer zweiten, durch eine Bedienungsperson betätigte Stellung gezeigt wird. Diese Stellung ist ähnlich zu der Stellung der Ausführungsform, welche in den Figuren 4A und 4B gezeigt wird. In dieser zweiten Stellung hat eine Bedienungsperson sowohl das zweite Steuerelement 84 als auch das erste Steuerelement 82 nach vorn gedrückt, um beide Zentralbereiche 100 und 110 axial nach vorn zu drehen und die Schenkel 96, 98, 112 nach vorn und unten, wie dies durch den Pfeil B gezeigt wird, zu drücken. Bei dieser zweiten Stellung handelt es sich um eine vollständig betätigte Höchstgeschwindigkeitsstellung für beide erste Steuerelemente 82. Die beiden Steuerelemente 82, 84 erstrecken sich nun im Wesentlichen gerade nach vorne. In alternativen Ausführungsformen könnten die zwei Steuerelemente 82, 84 leicht nach unten oder oben abgewinkelt sein. Das erste Steuerelement 82 wurde an das Halteelement 120 herangebracht. Dies erlaubt es der Bedienungsperson, alle drei Elemente 82, 84, 120 mit einer einzelnen Hand oder beiden Händen zu greifen. In einer bevorzugten Ausführungsform würde das erste Steuerelement 82 nur in eine maximale Vorwärtsstellung gebracht werden, wenn das Arbeitsgerät 10 und die Bedienungsperson einen steilen Hang mit hoher Geschwindigkeit erklimmen würden. Es könnte jedoch jede passende Geschwindigkeit mit Bezug auf die Stellung des ersten Steuerelements 82 vorgesehen werden.

Wenn der Zentralbereich 100 des ersten Steuerelements 82 nach vorn gedreht ist, ist der Halter 92 nach oben und rückwärts geschwenkt. Dies bewirkt, dass der rückwärtige Endbereich des Drahtes 102 nach oben und rückwärts gezogen wird. Wie oben angemerkt, ist der vordere Endbereich des Drahtes 102 mit dem Getriebe 26 verbunden. Wenn an dem Draht 102 durch das erste Steuerelement 82 gezogen wird, betätigt dies das Getriebe 26, um Antriebskraft von dem Motor 24 zu den angetriebenen Rädern 22d zu übertragen. In der Höchstgeschwindigkeitsstellung, wie sie in den Figuren 8A-8C gezeigt wird, befindet sich das Getriebe 26 in seiner vollständig betätigten Stellung. Somit sind die angetriebenen Räder 22d über das Getriebe 26 vollständig mit dem Motor 24 verbunden. Das Arbeitsgerät 10 kann sich in seiner Höchstgeschwindigkeit über den Untergrund bewegen.

In dieser Ausführungsform ist das zweite Steuerelement 84 derart dimensioniert ausgebildet und mit Bezug auf das erste Steuerelement 82 ausgerichtet, dass das zweite Steuerelement 84 bei dem ersten Steuerelement 82 verbleiben kann, wenn das erste Steuerelement 82 von seiner deaktivierten Stellung in seine vollständig betätigte Stellung gebracht wird. Wie es durch einen Vergleich der Figuren 7A und 8A ersehen werden kann, bewegt sich das zweite Steuerelement 84 relativ zu dem ersten Steuerelement 82 zwischen diesen beiden Stellungen nicht. Das Anwesenheitssystem bleibt zwischen der ersten und der zweiten in den Fig. 7A und 8A gezeigten Stellung betätigt.

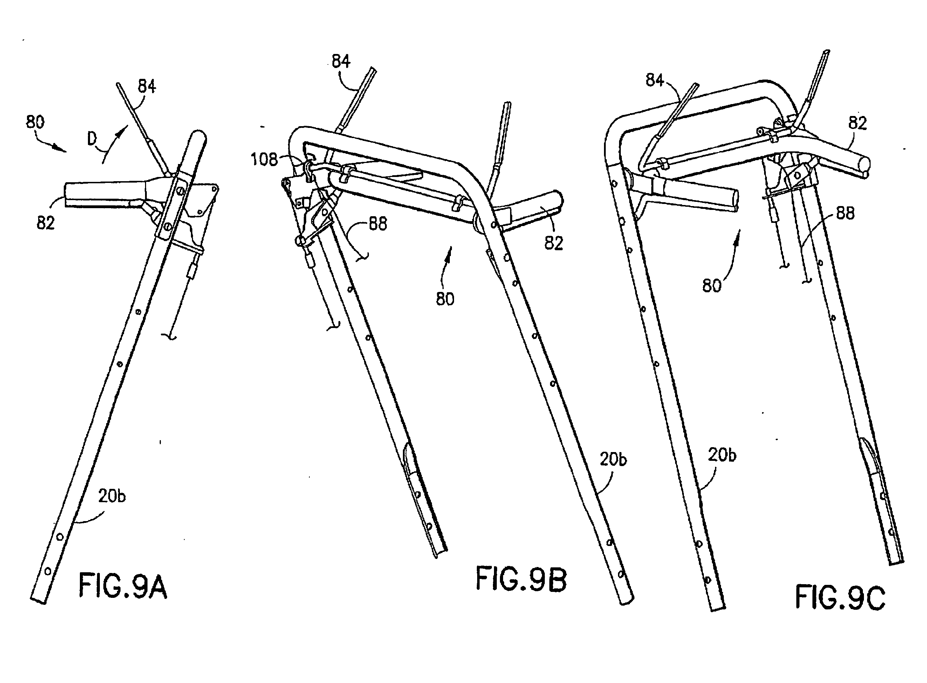

In den Figuren 9A-9C wird die Steuerung 80 in einer anderen Stellung gezeigt. Diese Stellung entspricht einer Stellung in der das erste Steuerelement 82 in seine vollständig betätigte Stellung bewegt wurde, die Bedienungsperson aber das zweite Steuerelement 84 losgelassen hat. Selbst obwohl sich das erste Steuerelement 82 in seiner vollständig betätigten Stellung befindet, zieht der Draht 88 an dem Befestigungsmittel 108, wenn die Bedienungsperson das zweite Steuerelement 84 loslässt. Diese Kraft zwingt das zweite Steuerelement 84 dazu, sich nach oben und rückwärts zu drehen, wie dies durch den Pfeil D gezeigt wird, zurück in seine unbetätigte Stellung. Der Draht 88, kehrt somit in seine unbetätigte Stellung zurück und das Anwesenheitssystem wird in seine AUS-Stellung gebracht, um den Motor 24 abzuschalten, beispielsweise durch das Beenden des Zündens einer Zündkerze des Motors 24 und/oder ein Betätigen einer Schwungradbremse des Motors 24 und/oder ein Trennen des Getriebes zwischen dem Motor 24 und dem Messerbalken 28 und/oder einem Hindern des antreibbaren Rades 22d am Drehen, wie durch ein Anlegen einer Bremse. Es könnte jedoch jedes passende Anwesenheitssystem vorgesehen werden. Selbst obwohl das erste Steuerelement 82 sich in seiner Höchstgeschwindigkeitsstellung befindet, wird das antreibbare Rad 22d das Arbeitsgerät 10 nicht vorwärts bewegen.

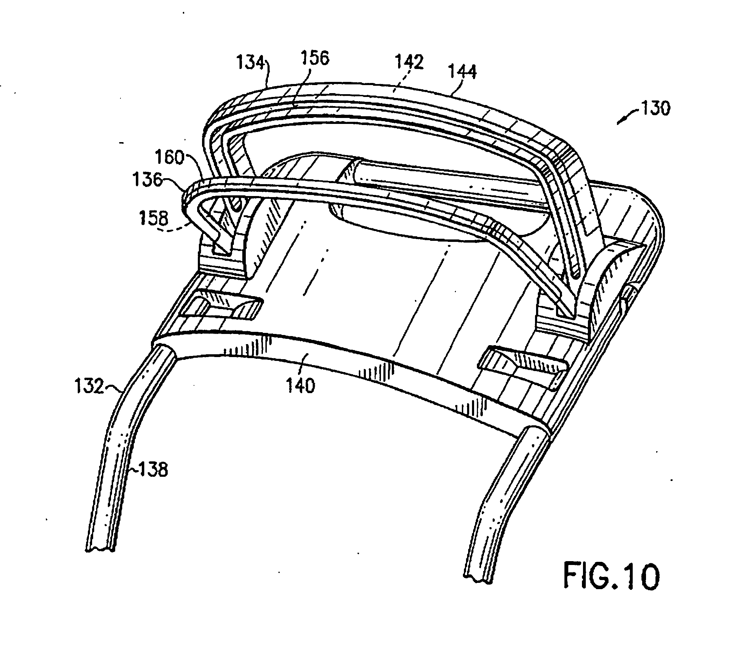

Mit Bezug auf die Figuren 10-13 wird nun eine alternative Ausführungsform beschrieben werden. Eine Griffanordnung 130 weist im Wesentlichen einen Rahmen 132, ein Geschwindigkeitssteuerungselement bzw. ein erstes Steuerelement 134 und einen Anwesenheitsschalter bzw. ein zweites Steuerelement 136 auf. Der Rahmen 132 weist einen im Wesentlichen U-förmigen Holm 138 und eine Abdeckung 140 auf. Der U-förmige Holm 138 besteht vorzugsweise aus Metall und ist an dem Mähwerk eines Rasenmähers oder an einem Arbeitsgerät 10 angebracht. Die Abdeckung besteht vorzugsweise aus Kunststoff und ist an einem rückwärtigen Endbereich des metallenen U-förmigen Holms 138 angebracht. In alternativen Ausführungsformen könnte jedes passende Material verwendet werden. Die Abdeckung 140 stellt an beiden Seiten des Holms 138 an zwei Schwenkstellen, den Schwenkstellen des Steuerelements 134 an dem Holm 138 und des zweiten Steuerelements 136 an dem ersten Steuerelement 134 eine Abdeckung zur Verfügung. Die Abdeckung bietet auch Raum für Merkmale oder Produktinformationen oder anderen Anzeigen, wie Sicherheits- oder Warnhinweisen oder -aufklebern. In einer alternativen Ausführungsform könnte die Abdeckung nicht vorgesehen sein.

Das erste Steuerelement 134 weist im Wesentlichen einen U-förmigen Bügel 142 mit einem aufgeformten Griff 144 aus Weichkunststoff auf. Der Bügel 142 besteht vorzugsweise aus Metall. Die Schenkel des U-förmigen Bügels 142 sind auf gegenüberliegenden Seiten des Holm 138 an Schwenkpunkten 146 schwenkbar angebracht. Untere Bereiche 148 der Schenkel erstrecken sich bis unter die Schwenkpunkte 146. Die Bereiche 148 weisen eine Schwenk-/Draht-Befestigung bzw. ein Befestigungsmittel 150 auf. Einer der Bereiche 148 weist einen Arm 152, mit einem Befestigungspunkt 154 für den Mantel eines Anwesenheits-Zug-Druck-Kabels auf. Der vordere Bereich des Griffelements 144 weist eine Aussparung 156 zur Aufnahme eines rückwärtigen Bereichs des zweiten Steuerelements 136 auf. In alternativen Ausführungsformen könnte das erste Steuerelement 134 aus jedem passenden Material/passenden Materialien bestehen und könnte jede passende Gestalt annehmen.

Das zweite Steuerelement 136 ist im Wesentlichen U-förmig. In dieser Ausführungsform weist das zweite Steuerelement 136 einen U-förmigen, metallenen Bügel 158 und eine Abdeckung 160 aus Kunststoff auf. In alternativen Ausführungsformen könnte das zweite Steuerelement 136 in jeder passenden Art und Weise ausgeführt bzw. aus jedem passenden Material bestehen. Der untere Bereich der Schenkel des Bügels 158 weist Krümmungsbereiche 162 und Endbereiche 164 auf, welche schwenkbar mit den Bereichen 148 an Befestigungen 150 angebracht sind.

Das Arbeitsgerät 10 weist ein Anwesenheitskabel bzw. eine Verbindung 166 mit einem äußeren Mantel 168 und einem inneren Draht 170 auf. Ein rückwärtiger Endbereich des Mantels 168 ist an den Befestigungspunkten 154 des ersten Steuerelements 134 angebracht. Ein rückwärtiger Endbereich des inneren Drahtes 170 ist an dem Bügel 158 des zweiten Steuerelements 136 über ein Befestigungsmittel 172 angebracht. Wenn das zweite Steuerelement 136 mit Bezug auf das erste Steuerelement 134 verschwenkt wird, kann sich der Draht 170 relativ zu dem Mantel 168 bewegen.

Das Arbeitsgerät 10 weist darüber hinaus ein Geschwindigkeitssteuerungskabel bzw. eine Verbindung 174 mit einem äußeren Mantel 176 und einem inneren Draht 178 auf. Ein rückwärtiger Endbereich des Mantels 176 ist an dem Rahmen 132 über ein Befestigungsmittel 180 angebracht. Ein rückwärtiger Endbereich des inneren Drahtes 178 ist an der Befestigung 150 des ersten Steuerelements 134 über eine Verbindung 182 angebracht. Wenn das erste Steuerelement 134 mit Bezug auf den Rahmen 132 verschwenkt wird, kann sich der Draht 178 relativ zu dem Mantel 176 bewegen. Da das zweite Steuerelement 136 mit dem ersten Steuerelement 134 und der Mantel 168 mit dem ersten Steuerelement 134 verbunden ist, bewegt sich der Draht 170 nur relativ zu seinem äußeren Mantel 168, wenn das zweite Steuerelement 136 bezogen auf das erste Steuerelement 134 bewegt wird.

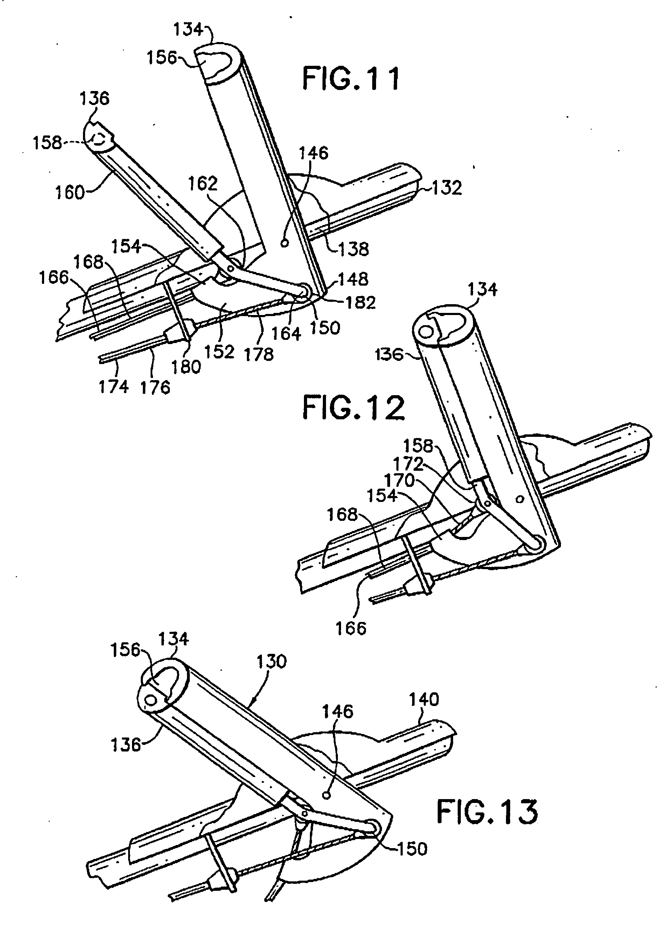

Die Figuren 10 und 11 zeigen die Griffanordnung 130 in einer Ruhestellung. Das zweite Steuerelement 136 ist bezogen auf das erste Steuerelement 134 vorwärts gerichtet und das erste Steuerelement ist an dem Rahmen 132 in einer rückwärtigen Stellung angeordnet. Diese Ruhestellung wird vorzugsweise durch eine Zug- oder Spannkraft erzielt, welche durch die Drähte 170, 178 aufgebracht wird.

Figur 12 zeigt die Griffanordnung 130 in einer Neutralstellung. In der gezeigten Neutralstellung hat eine Bedienungsperson das zweite Steuerelement 136 nach rückwärts gegen eine Frontseite des ersten Steuerelements 134 bewegt. Dies löst eine Motorbremse, welche an einem gegenüberliegenden Endbereich der Verbindung 166 angebracht ist.

Figur 13 zeigt die Griffanordnung 130 in einer Höchstgeschwindigkeitsstellung. In dieser Stellung hat eine Bedienungsperson das erste Steuerelement 134 und das zweite Steuerelement 136 zusammen als eine Einheit nach vorn bewegt. Wenn die Bedienungsperson das zweite Steuerelement 136 loslässt, wird es um die Befestigung 150 drehend nach vorn schnellen, um es der Motorbremse zu erlauben, einzurücken und den Motor 24 anzuhalten. Der vordere Endbereich des ersten Steuerelements 134, der die Aussparung 156 aufweist, und der rückwärtige Endbereich des zweiten Steuerelements 136 können ineinander stecken oder eingreifen, um verhältnismäßig große Griffe zur Verfügung zu stellen, welche bequem als eine einzige Einheit zu greifen sind. Die Abdeckung 140 kann die Befestigungen 146 und 150 abdecken.

Diese alternative Ausführungsform zeigt, dass der Anwesenheitsschalter bzw. das zweite Steuerelement 136 vor dem Geschwindigkeitssteuerungselement bzw. dem ersten Steuerelement 134 angeordnet sein kann. In alternativen Ausführungsformen könnten beliebige geeignete Elemente vorgesehen sein, um einen Anwesenheitsschalter bzw. ein zweites Steuerelement 136 zur Verfügung zu stellen, welcher vor dem Geschwindigkeitssteuerungselement bzw. dem ersten Steuerelement 134 vorgesehen ist, aber schwenkbar mit dem ersten Steuerelement 134 verbunden ist.

Obwohl die vorliegende Erfindung mit Bezug auf nur drei Ausführungsformen, welche in der Zeichnung dargestellt sind, beschrieben wurde, könnten die Merkmale der vorliegenden Erfindung in andere alternative Ausführungsformen einbezogen werden. Die vorliegende Erfindung stellt eine drehbare Griffanordnung bzw. Steuerung und ein Getriebe mit variabler Geschwindigkeit zur Verfügung, welche zusammenwirken, um eine benutzerfreundlichere und automatische Geschwindigkeitssteuerung, welche die Geschwindigkeit eines Arbeitsgeräts 10 basierend auf der Gehgeschwindigkeit einer Bedienungsperson und der Winkelstellung eines Geschwindigkeitssteuerungselements, beispielsweise eines Bügels, zur Verfügung zu stellen. Auf rauem Untergrund springt der obere Bereich des Holms 20 auf und ab. Mit der vorliegenden Erfindung neigt die Auf-und-Ab-Bewegung des oberen Bereichs des Holms 20 nicht dazu das erste Steuerelement zu verschwenken. Somit ist die Geschwindigkeit des Arbeitsgeräts 10 über den Untergrund leichter zu steuern als bei bekannten Arbeitsgeräten bzw. Rasenmähern. Es können ein oder mehrere Handgriff(e) bzw. Steuerelement(e) vorgesehen sein, so dass, wenn eine Steigung aufwärts gegangen wird, mehr Kraft direkt auf den Holm 20 über die Halteelemente aufgebracht werden kann. Darüber hinaus kann eine Bedienungsperson auf rauem Untergrund das Halteelement als eine zusätzlich Stütze zur Steuerung der Geschwindigkeit nutzen. Ein Reibscheibenpaket kann Widerstand hinzufügen, so dass das erste Steuerelement nicht leicht zu drehen ist, wenn der obere Bereich des ortsfesten Holms sich auf rauem Untergrund nach oben und unten bewegt. Das Design der vorliegenden Erfindung erlaubt auch mehrere Möglichkeiten um die Geschwindigkeit zu steuern und das Gerät zu drehen bzw. zu wenden, so dass eine geringere Ermüdung einer Bedienungsperson auftritt. Während einer Drehung kann eine Bedienungsperson eine Hand auf das erste Steuerelement und eine Hand auf den oberen Bereich des oberen, ortsfesten Holms legen und die Geschwindigkeit viel besser steuern, wenn die Bedienungsperson das Arbeitsgerät 10 wendet. Die Ausführungsform, welche in den Figuren 6 - 9 dargestellt wird, kann für eine Bedienungsperson bequemer sein, da, wenn die Bedienungsperson ihre Hände auf den Schenkeln der Elemente 82, 84 anordnet, sie die Handgelenke nicht verdrehen muss.

Es sollte deutlich werden, dass die vorstehende Beschreibung nur beispielhaft für die Erfindung ist. Verschiedene Alternativen und Veränderungen können durch den Fachmann durchgeführt werden, ohne von der Erfindung abzuweichen. Entsprechend ist es beabsichtigt, dass die vorliegende Erfindung alle solchen Alternativen, Veränderungen und Varianten umfassen soll, welche in den Schutzbereich der folgenden Ansprüche fallen.

## Patentansprüche

1. Selbstfahrendes Arbeitsgerät (10) mit einem Rahmen (12), einem Motor (24) und wenigstens einem antreibbaren Rad (22d), welches mit dem Motor (24) über ein Getriebe (26) verbindbar ist, sowie einem Holm (20, 138), wobei an dem Holm (20, 138) in einem dem Rahmen (12) abgewandten Endbereich wenigstens ein erstes und ein zweites Steuerelement (30, 32, 82, 84, 134, 136) vorgesehen sind, wobei das erste Steuerelement (30, 82, 134) als ein Geschwindigkeitssteuerungselement und das zweite Steuerelement (32, 84, 136) als ein Anwesenheitsschalter ausgebildet ist, und wobei das erste Steuerelement (30, 82, 134) mit dem Holm (20, 138) und das zweite Steuerelement (32, 84, 136) mit dem ersten Steuerelement (30, 82, 134) schwenkbar verbunden ist, **dadurch gekennzeichnet, dass** zumindest an einem der Steuerelemente (30, 32, 82, 84, 134, 136), in der Art eines Reibscheibenpakets (38, 102) ausgebildete Mittel vorgesehen sind, welche einer Bewegung des Steuerelements (30, 32, 82, 84, 134, 136) einen Widerstand entgegensetzen.

2. Arbeitsgerät nach Anspruch 1, **dadurch gekennzeichnet, dass** das erste Steuerelement (30, 82, 134) und/oder das zweite Steuerelement (32, 84, 136) in der Art eines ein- oder mehrteiligen Bügels (40, 90, 106, 142, 158), beispielsweise als ein U-förmiger Bügel bzw. als zumindest annähernd L- oder C-förmige Bügelelemente ausgebildet ist/sind.

3. Arbeitsgerät nach Anspruch 1 oder 2, **dadurch gekennzeichnet, dass** das wenigstens eines der Steuerelemente (30, 32, 82, 84, 134, 136) mit dem Getriebe (26) über eine Verbindung (34, 86, 174) vorzugsweise in der Art eines Zug-Druck-Kabels wirksam verbunden ist.

4. Arbeitsgerät nach einem oder mehreren der vorherigen Ansprüche, **dadurch gekennzeichnet, dass** die Mittel an dem ersten Steuerelement (30, 82, 134) vorgesehen sind.

5. Arbeitsgerät nach einem oder mehreren der vorherigen Ansprüche, **dadurch gekennzeichnet, dass** an einem Steuerelement (30, 82, 134) eine Führung (42) vorgesehen ist, welche mit den Verbindungen (34, 36, 174) bzw. dem Zug-Druck-Kabel zusammenwirken kann.

6. Arbeitsgerät nach einem oder mehreren der vorherigen Ansprüche, **gekennzeichnet durch** ein an dem Holm (20, 138) zumindest im Wesentlichen ortsfest vorgesehenes Halteelement (68).

7. Arbeitsgerät nach Anspruch 6, **dadurch gekennzeichnet, dass** wenigstens eines der Steuerelemente (30, 32, 82, 84, 134, 136) eine Betriebsstellung einnehmen kann, in denen das Steuerelement (30, 32, 82, 84, 134, 136) zumindest im Wesentlichen an das Halteelement (68) angrenzt.

8. Arbeitsgerät nach einem oder mehreren der vorherigen Ansprüche, **dadurch gekennzeichnet, dass** das erste Steuerelement (30, 82, 134), das zweite Steuerelement (32, 84, 136) und/oder das Halteelement (68) sich bezogen auf das Arbeitsgerät (10) zumindest im Wesentlichen nach oben erstrecken.

9. Gerät zur Rasen-, Garten- bzw. Grundstückspflege, insbesondere ein handgeführter Rasenmäher, ausgebildet nach einem oder mehreren der vorherigen Ansprüche.

## Claims

1. Self-propelling working machine (10) with a frame (12), a motor (24) and at least one drivable wheel (22d), which can be connected to the motor (24) via a gear mechanism (26), and with a handlebar (20, 138), wherein at least one first and one second control element (30, 32, 82, 84, 134, 136) are provided on the handlebar (20, 138) in an end region facing away from the frame (12), wherein the first control element (30, 82, 134) is designed as a speed control element, and the second control element (32, 84, 136) is designed as an operator presence switch, and wherein the first control element (30, 82, 134) is connected pivotably to the handlebar (20, 138), and the second control element (32, 84, 136) is connected pivotably to the first control element (30, 82, 134), **characterized in that** means designed in the manner of a friction disc assembly (38, 102) are provided at least on one of the control elements (30, 32, 82, 84, 134, 136) and provide resistance to a movement of the control element (30, 32, 82, 84, 134, 136).

2. Working machine according to Claim 1, **characterized in that** the first control element (30, 82, 134) and/or the second control element (32, 84, 136) is/are designed in the manner of a single- or multi-part bow (40, 90, 106, 142, 158), in particular as a U-shaped bow or as at least approximately L- or C-shaped bow elements.

3. Working machine according to Claim 1 or 2, **characterized in that** at least one of the control elements (30, 32, 82, 84, 134, 136) is actively connected to the gear mechanism (26) via a connection (34, 86, 174) preferably in the manner of a pull-push cable.

4. Working machine according to one or more of the preceding claims, **characterized in that** the means are provided on the first control element (30, 82, 134).

5. Working machine according to one or more of the preceding claims, **characterized in that** a guide (42) which can interact with the connections (34, 36, 174) or the pull-push cable is provided on a control element (30, 82, 134).

6. Working machine according to one or more of the preceding claims, **characterized by** a holding element (68) provided in an at least substantially positionally fixed manner on the handlebar (20, 138).

7. Working machine according to Claim 6, **characterized in that** at least one of the control elements (30, 32, 82, 84, 134, 136) can take up an operating position in which the control element (30, 32, 82, 84, 134, 136) is at least substantially adjacent to the holding element (68).

8. Working machine according to one or more of the preceding claims, **characterized in that** the first control element (30, 82, 134), the second control element (32, 84, 136) and/or the holding element (68) extend at least substantially upwards with respect to the working machine (10).

9. Machine for mowing and soil working, in particular a walking mower, designed according to one or more of the preceding claims.

## Revendications

1. Machine de travail automotrice (10) comprenant un châssis (12), un moteur (24) et au moins une roue pouvant être entraînée (22d), qui peut être connectée au moteur (24) par le biais d'une transmission (26), ainsi qu'un longeron (20, 138), au moins un premier et un deuxième élément de commande (30, 32, 82, 84, 134, 136) étant prévus sur le longeron (20, 138) dans une région d'extrémité opposée au cadre (12), le premier élément de commande (30, 82, 134) étant réalisé sous forme d'élément de commande de vitesse et le deuxième élément de commande (32, 84, 136) étant réalisé sous forme de détecteur de présence, et le premier élément de commande (30, 82, 134) étant connecté au longeron (20, 138) et le deuxième élément de commande (32, 84, 136) étant connecté au premier élément de commande (30, 82, 134) de manière pivotante, **caractérisée en ce que** des moyens réalisés au moins sur l'un des éléments de commande (30, 32, 82, 84, 134, 136) à la manière d'un paquet de disques de frottement (38, 102) sont prévus, lesquels opposent une résistance à un mouvement de l'élément de commande (30, 32, 82, 84, 134, 136).

2. Machine de travail selon la revendication 1, **caractérisée en ce que** le premier élément de commande (30, 82, 134) et/ou le deuxième élément de commande (32, 84, 136) sont réalisés sous forme d'un étrier en une ou plusieurs parties (40, 90, 106, 142, 158), par exemple sous forme d'un étrier en forme de U, ou sous forme d'éléments d'étrier au moins approximativement en forme de L ou de C.

3. Machine de travail selon la revendication 1 ou 2, **caractérisée en ce que** l'au moins un des éléments de commande (30, 32, 82, 84, 134, 136) est connecté fonctionnellement à la transmission (26) par le biais d'une connexion (34, 86, 174), de préférence à la manière d'un câble de traction-compression.

4. Machine de travail selon l'une quelconque ou plusieurs des revendications précédentes, **caractérisée en ce que** les moyens sont prévus sur le premier élément de commande (30, 82, 134).

5. Machine de travail selon l'une quelconque ou plusieurs des revendications précédentes, **caractérisée en ce que** l'on prévoit sur un élément de commande (30, 82, 134) un guide (42) qui peut coopérer avec les connexions (34, 36, 174) ou le câble de traction-compression.

6. Machine de travail selon l'une quelconque ou plusieurs des revendications précédentes, **caractérisée par** un élément de retenue (68) prévu au moins sensiblement fixement sur le longeron (20, 138).

7. Machine de travail selon la revendication 6, **caractérisée en ce qu'**au moins l'un des éléments de commande (30, 32, 82, 84, 134, 136) peut adopter une position fonctionnelle, dans laquelle l'élément de commande (30, 32, 82, 84, 134, 136) est au moins sensiblement adjacent à l'élément de retenue (68).

8. Machine de travail selon l'une quelconque ou plusieurs des revendications précédentes, **caractérisée en ce que** le premier élément de commande (30, 82, 134), le deuxième élément de commande (32, 84, 136) et/ou l'élément de retenue (68) s'étendent, par rapport à la machine de travail (10), au moins essentiellement vers le haut.

9. Machine pour tondre l'herbe et travailler le sol, en particulier une tondeuse à gazon guidée manuellement, réalisée selon l'une quelconque ou plusieurs des revendications précédentes.
